**Europäisches Patentamt**

**European Patent Office**

**Office européen des brevets**

(19)

(11) Veröffentlichungsnummer: **0 390 939 B1**

## (12) EUROPÄISCHE PATENTSCHRIFT

(45) Veröffentlichungstag der Patentschrift:
28.08.91 Patentblatt 91/35

(21) Anmeldenummer: 89105761.4

(22) Anmeldetag: 01.04.89

(51) Int. Cl.⁵: **B26F 1/38,** B26D 7/20,
B26D 7/02, B23D 49/00,
B23D 51/12, B26D 1/547

(54) Vertikalformschneidmaschine.

(43) Veröffentlichungstag der Anmeldung:
10.10.90 Patentblatt 90/41

(45) Bekanntmachung des Hinweises auf die
Patenterteilung:
28.08.91 Patentblatt 91/35

(84) Benannte Vertragsstaaten:
BE DE ES FR GB GR IT NL SE

(56) Entgegenhaltungen:
DE-A- 1 919 470
DE-A- 2 207 196
DE-A- 2 329 238
DE-A- 3 312 133
DE-A- 3 444 612
DE-A- 3 813 128
DE-U- 6 927 437

(56) Entgegenhaltungen:
DE-U- 7 000 758
GB-A- 1 106 705
GB-A- 2 206 521
US-A- 3 158 185
US-A- 3 196 910
US-A- 4 548 115

(73) Patentinhaber: **Albrecht Bäumer KG**
**Spezialmaschinenfabrik**
**Asdorfer Strasse 96-106**
**W-5905 Freudenberg (DE)**

(72) Erfinder: **Pötzsch, Rolf**
**Am Aspenwald 16**
**W-5905 Freudenberg (DE)**

(74) Vertreter: **Blumbach Weser Bergen Kramer**
**Zwirner Hoffmann Patentanwälte**
**Sonnenberger Strasse 100**
**W-6200 Wiesbaden 1 (DE)**

## Beschreibung

Die Erfindung bezieht sich auf eine Vertikalformschneidemaschine, insbesondere zum Schneiden von Schaumstoff.

Bei einer bekannten Vertikalschneidemaschine für Schaumstoffe (DE-C-3444612) ist ein etwa C-förmiger Halter oder Schneidaggregatträger vorgesehen, dessen Öffnungsmaul durch einen umlaufenden Schneiddraht als Schneidorgan überbrückt ist, das auch als Heizdraht ausgebildet sein kann und sich durch einen Schlitz in einer horizontalen Auflagefläche des Werkstücktisches erstreckt. Das Schneidorgan kann entlang dieses Schlitzes verschoben werden, um ein auf dem Werkstücktisch liegendes Schneidgut zu durchtrennen. Die Auflagefläche besteht aus zwei getrennten Vorschubelementen zum Transport des Schneidgutes quer zur Verschieberichtung des Schneidorgans, so daß insgesamt Kurven geschnitten werden können. Im einzelnen besteht die Auflagefläche des Werkstücktisches aus zwei Endlosbändern, die dem — trichterförmigen — Schlitz benachbart sind und die gleichsinnig angetrieben werden können, um ein aufliegendes Werkstück nach der einen oder anderen Richtung entgegen dem Widerstand des Schneiddrahtes zu bewegen.

Beim Schneiden erzeugt der Schneiddraht eine Fräsfuge, um welche die geschnittenen Formstücke zusammenrücken können. Die Endlosbänder haben beim Antrieb die Tendenz, gelegentlich seitlich zu wandern. Wegen dieser beiden Erscheinungen werden Konturverschiebungen und damit ungenaue Formschnitte erzielt. Bei kleinen Schaumstoffstücken besteht überhaupt das Problem, daß die Reibung des auf den Bändern aufliegenden Schaumstoffes gegenüber dem notwendigen Schneiddruck zu klein ist, so daß die Gefahr des Rutschens des Schaumstoffes besteht mit der Folge, daß die geschnittene Kurve fehlerhaft wird. Wenn der umlaufende Draht das ausgeschnittene Schaumstoffstück in Richtung auf den trichterförmigen Schlitz oder Spalt zwischen den beiden Bändern zieht, dann besteht die Gefahr, daß dieses Band das ausgeschnittene Schaumstoffstück in den Spalt hineinzieht, woraus sich ebenfalls ein fehlerhafter Schneidverlauf ergibt. Wenn dagegen der Draht in solcher Richtung umläuft, daß das Schneidgut von der Auflagefläche angehoben wird, kann der notwendige Schneiddruck quer zum Werkstück nicht erzielt werden, und es gelingt kein Kurvenschnitt.

Eine andere Schaumstoff-Formschneidemaschine ist als Horizontalschneidemaschine bekannt geworden (DE-C-3312133), bei der das Schneidorgan als schmales endliches oszillierendes Bandmesser ausgebildet ist und eine Länge aufweist, die den Schneidbereich oberhalb des Werkstücktisches nur wenig übersteigt. Das Bandmesser ist zwischen zwei Einspanneinrichtungen eingespannt, die motorisch drehbar sind und in ihrer Längsrichtung oszillatorisch angetrieben werden. Das Bandmesser wird von einem Schneidaggregatträger geführt, der am Maschinengestell auf und ab verfahrbar ist. Das Werkstück kann mittels des Werkstücktisches in horizontaler Richtung bewegt werden. Es ist somit eine Relativverschiebung des Werkstücks zum Bandmesser nach zwei Achsen möglich. Das Bandmesser wird immer in die gewünschte Schneidrichtung gedreht, so daß Kurven geschnitten werden können, die in senkrechten Flächen erscheinen.

Der Erfindung liegt die Aufgabe zugrunde, eine Vertikalformschneidemaschine zu schaffen, mit der Kurven in waagrechten Ebenen geschnitten werden können, ohne daß es zu Störungen kommt.

Die gestellte Aufgabe wird aufgrund einer Vertikalformschneidemaschine mit den Merkmalen des Anspruchs 1 gelöst.

Indem der Spalt zwischen gerätefesten Tischplatten angeordnet ist, kann er ohne trichterförmigen Einlauf und sehr schmal gemacht werden, um Schaumstoffteile am Eindringen zu hindern. Indem das Schneidorgan als Bandmesser ausgebildet ist, entsteht keine Fräsfuge, wodurch nicht nur der Anfall von Schaumstoffstaub vermieden wird, sondern auch die Gefahr des Verschiebens der geschnittenen Schaumstofformkörper vermieden wird. Bei oszillatorischem Antrieb des Bandmessers kann dieses besonders schmal gestaltet werden, wodurch auch der Spalt zwischen den Tischplatten besonders schmal gemacht werden kann und die Gefahr des Hineinziehens von Schaumstoffmaterial in den Spalt vermieden wird. (Der Spalt muß nur Platz für das sich drehende Bandmesser bieten können.)

Um das Schaumstoffmaterial am Abheben vom Werkstücktisch zu hindern, wenn sich das Messer (gerade) nach oben bewegt, ist eine Gleitkufe oder ein Gleitschuh mit Schlitz zum Durchtritt des Messers vorgesehen. Die Gleitkufe fängt den nach oben gerichteten Schneiddruck ab. Der Schlitz in der Gleitkufe folgt der Schnittrichtung des Messers.

Der Schneidaggregatträger hat zwei Schenkel, einen unteren Schenkel, der unterhalb der Tischplatte im Bereich des Spaltes angeordnet ist, und einen oberen Schenkel, der sich in bestimmtem Abstand oberhalb der Tischplatte erstreckt und die maximale Höhe des zu schneidenden Werkstückes bestimmt. Längs der Schenkel laufen Führungen für die Werkzeugschlitten. Um diese in gleicher Richtung und mit gleicher Geschwindigkeit anzutreiben, kann man ein umlaufendes, biegsames Antriebsorgan, beispielsweise einen Zahnriemen, vorsehen, der sich mit Schlaufen längs der Führungen erstreckt, wobei der obere oder untere Trum dieser Schlaufen mit dem zugeordneten Werkzeugschlitten gekoppelt wird, um diesen anzutreiben. Das Bandmesser kann mittels eines Seils gespannt werden, welches ebenfalls über Schlaufen geführt ist.

Zum Antrieb der Schieber kann man sich ebenfalls je eines umlaufenden Antriebsorgans, beispielsweise in Form einer Kette, bedienen. Der jeweilige Schieber ist am oberen Trum der umlaufenden Kette angekoppelt, so daß man die Kette entsprechend der Länge des oberen Trum nach der einen oder anderen Seite antreiben kann, um den Schieber in Richtung auf den Spalt oder von diesem weg zu verschieben. Um die beiden Schieber mit dazwischen eingespanntem Schneidgut im Gleichlauf anzutreiben, wird der Antrieb der beiden umlaufenden Ketten miteinander gekoppelt. Zum Einspannen und Ausspannen des Werkstücks kann diese Kopplung gelöst werden, so daß der eine Schieber unabhängig von den anderen verfahren werden kann.

Die Erfindung wird anhand der Zeichnung beschrieben. Dabei zeigt :

Fig. 1     eine schematisierte, perspektivische Gesamtansicht der Vertikalformschneidemaschine,
Fig. 2     eine vergrößerte Einzelheit, nämlich einen Einspannkopf mit Niederhalter,
Fig. 3     eine Dreheinrichtung für den Einspannkopf und eine Verschiebeeinrichtung für den Niederhalter,
Fig. 4     eine vergrößerte Schnittansicht einer Einzelheit aus Fig. 3,
Fig. 5     einen Querschnitt durch ein Bandmesser, stark vergrößert,
Fig. 6     die Seitenansicht eines Bandmessers, stark vergrößert,
Fig. 7     den Antrieb des Bandmessers in der Y-Richtung,
Fig. 8     eine vergrößerte Einzelheit aus Fig. 7,
Fig. 9     den Antrieb für die X-Richtung,
Fig. 10    eine vergrößerte Einzelheit des Antriebes,
Fig. 11    eine weitere vergrößerte Einzelheit und
Fig. 12    einen Oszillationsantrieb.

Die Vertikalformschneidemaschine ist zum Antrieb eines Bandmessers 10 und eines Werkstückes 9 relativ zueinander in drei Achsrichtungen X, Y und Z gebaut, wobei die Z-Richtung mit der Längserstreckung des Bandmessers 10 zusammenfällt. Ferner ist das Bandmesser 10 um die Z-Achse drehbar, so daß insgesamt in der XY-Ebene Kurven geschnitten werden können. Man kann einen Maschinenhauptteil 1 zum Antrieb des Bandmessers 10 und einen Maschinenhauptteil 2 zum Antrieb des Werkstückes 9 unterscheiden.

Der als X-Achsenantrieb ausgebildete Maschinenhauptteil 2 weist eine ortsfeste, geteilte Tischplatte 3 mit einem durchgehenden, schmalen, die Breite des Bandmessers nur wenig übersteigenden Schlitz oder Spalt 3a in Y-Richtung auf, ferner sind oberhalb der Tischplatte 3 zwei Schieber 4 und 5 vorgesehen, die gegeneinander verstellt werden können, um das Werkstück 9 einzuspannen. Die Schieber 4 und 5 können zudem gemeinsam in X-Richtung verfahren werden, wobei sie ihren Einstellabstand mit zwischengeklemmtem Werkstück 9 beibehalten und das Werkstück 9 quer zum Bandmesser 10 bewegen, wie es die X-Komponente des jeweiligen Formschnittes erforderlich macht.

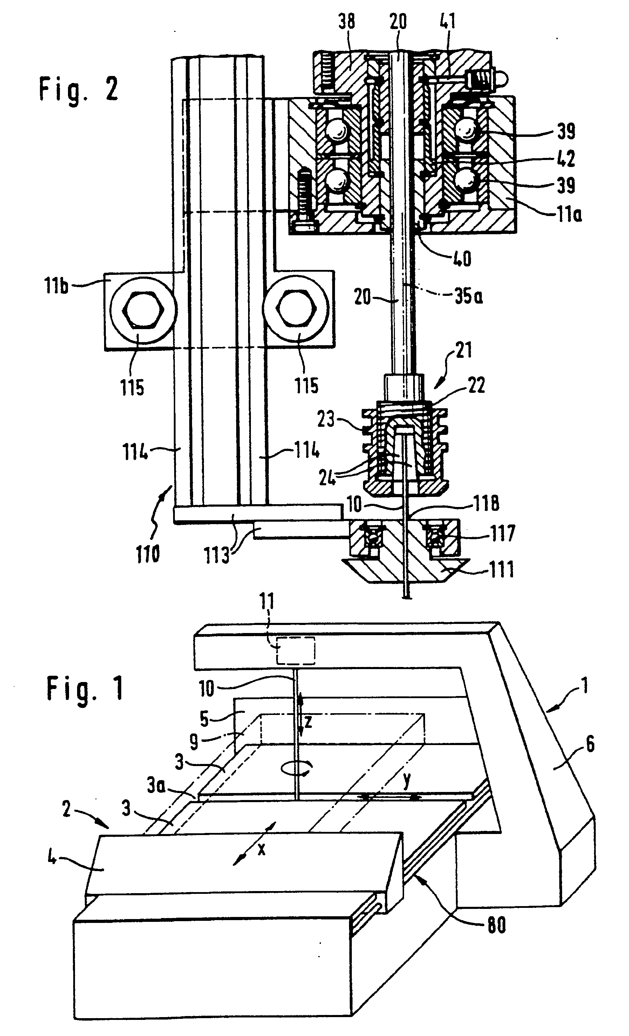

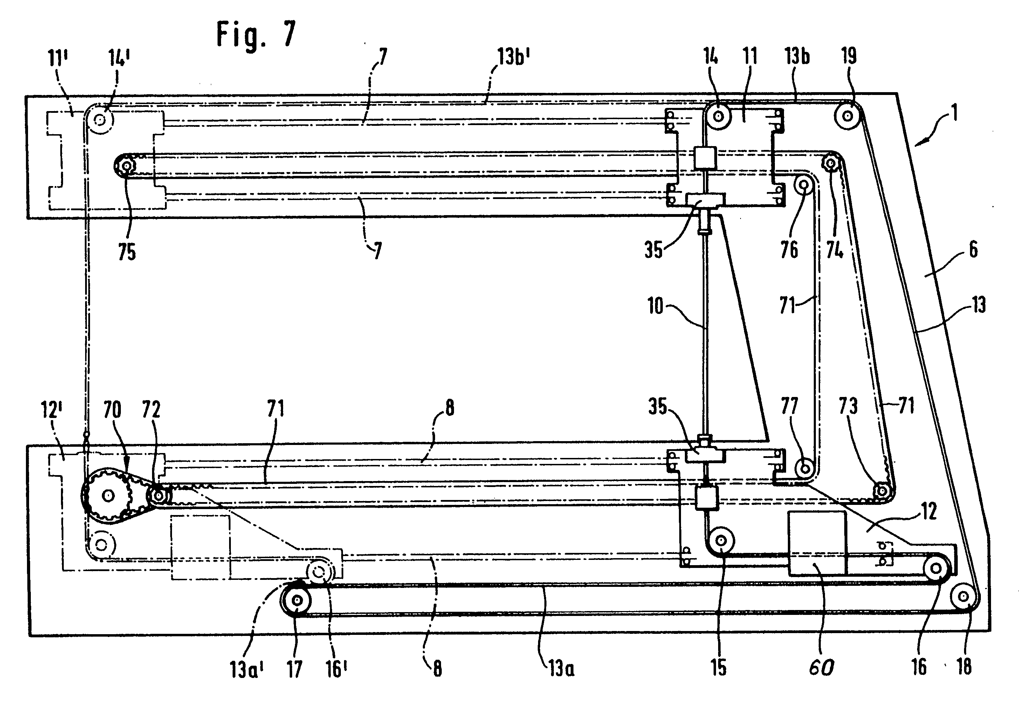

Der Maschinenhauptteil 1 weist einen bügelförmigen Schneidaggregatträger 6 (Fig. 1, 7 und 8) auf, welcher oberhalb der Tischplatte angeordnete horizontale Führungen 7 und unterhalb der Tischplatte angeordnete horizontale Führungen 8 umfaßt, die auf den jeweiligen Schenkeln des Schneidaggregatträgers 6 angebracht sind. Auf den Führungen 7 läuft ein oberer Werkzeugschlitten 11 und auf der unteren Führung 8 ein unterer Werkzeugschlitten 12. Das Bandmesser 10 als Werkzeug ist zwischen diesen beiden Schlitten 11, 12 eingefügt und bewegt sich im Betrieb längs des Schlitzes 3a. Dabei wird es mittels eines Seils 13 gespannt gehalten, welches über sechs Seilscheiben 14 bis 19 geführt ist. Die Achsen der Seilscheibe 14 sind am Werkzeugschlitten 11, die der Seilscheiben 15 und 16 am Werkzeugschlitten 12 und die der Seilscheiben 17, 18, 19 am Schneidaggregatträger 6 befestigt. Wenn die Werkzeugschlitten 11 und 12 senkrecht übereinander entlang ihrer Führungen 7 und 8 in Fig. 7 nach links verschoben werden und schließlich die Lage 11' bzw. 12' einnehmen, dann nehmen die Seilscheiben 14 und 16 die Lagen 14' und 16' ein. Im dem Maße, wie sich der Abstand zwischen den Seilscheiben 16 und 17 verringert und zu 13a' wird, vergrößert sich der Abstand 13b zwischen den Seilscheiben 14 und 19 und wird zu 13b'. Da die Schlaufenlänge 13a + 13b = 13a' + 13b' des Seils 13 bei der Verschiebung der Werkzeugschlitten 11 und 12 konstant bleibt, bleibt auch die Spannwirkung des Messers bei der Verschiebung der Werkzeugschlitten 11, 12 erhalten.

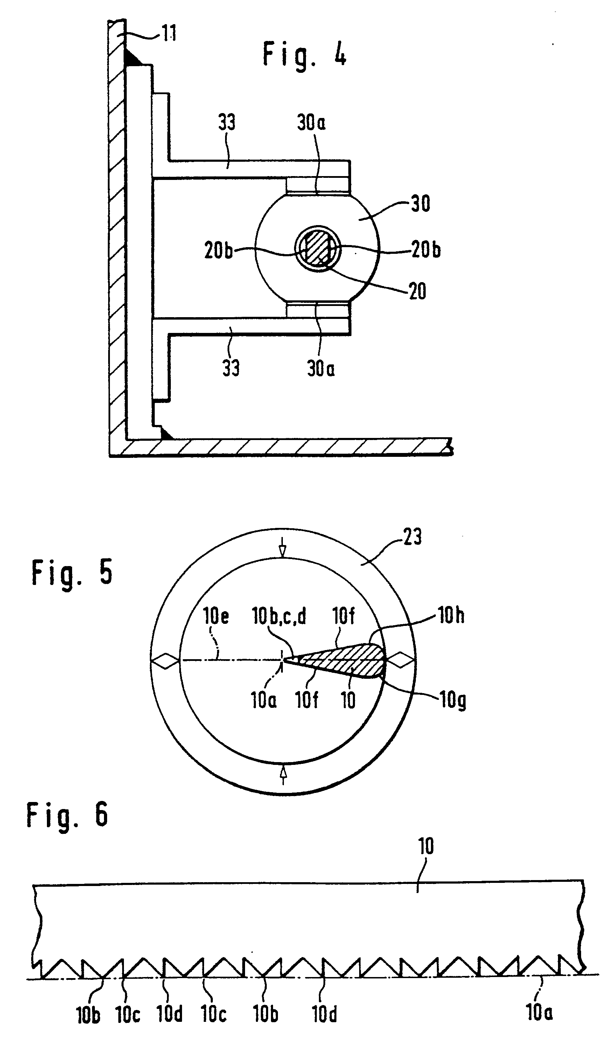

Das Bandmesser 10 ist als schmales, endliches Band ausgebildet und weist eine Länge auf, die den Schneidbereich oberhalb des Werkstücktisches 3 nur wenig übersteigt. Das Bandschneidmesser 10 (Fig. 5 und 6) ist doppelwangig zu einer Schneidkante 10a geschliffen und kann zusätzlich dicht mit kleinen Zähnen 10b, 10c, 10d versehen sein, die innerhalb einer einzigen Schneidebene 10e liegen, also nicht gegeneinander verschränkt sind. Die Breite des Bandmessers 10 beträgt vorzugsweise 1,5 bis 3 mm. Bei einer Breite vom 2 mm beträgt die Schliefflänge 10f etwa 1,5 mm. Der Messerrücken 10 g ist abgerundet. Die Dicke des Bandschneidmessers 10 beträgt etwa 0,6 mm. Die Länge des Bandmessers ist der Maulweite des Schneidaggregatträgers 6 angepaßt und beträgt beispielsweise 700 mm.

Es kann auch ein endloses Bandmesser verwendet werden, welches dann die Bahn des Seils 13 einnimmt, d.h. über die Scheiben 14 bis 19 geführt ist.

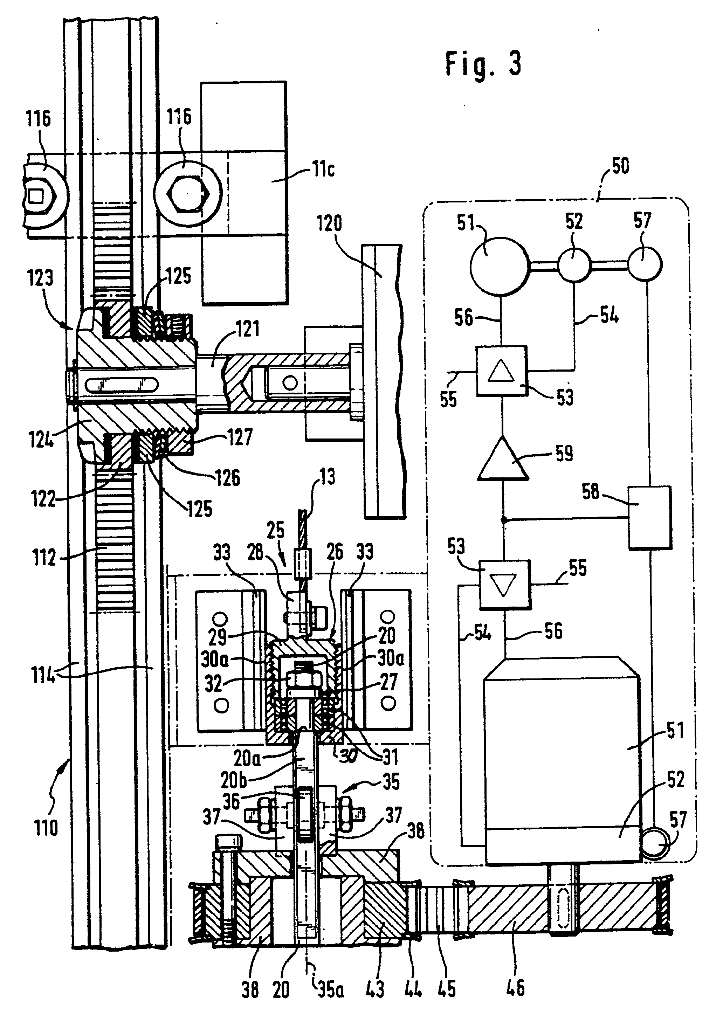

Bei einem endlichen Bandmesser 10 sind jeweils die Enden in je einem Einspannkopf 21 (Fig. 2) eingespannt, der am Ende je einer Antriebsstange 20 sitzt. Fig. 2 und 3 sind mit jeweils zueinander fluchtendem Stangenteil 20 aneinanderzusetzen, um die im Werkzeugschlitten 11 untergebrachte Einspanneinrichtung zu erhalten, von der es eine gleichartige Einspanneinrichtung im unteren Werkzeugschlitten 12 gibt, dessen Einspannkopf natürlich nach oben weist. Jeder Einspannkopf 21 besteht aus zwei hülsenartigen Bauteilen 22 und 23 sowie Festspannkeilen 24, die im Inneren der Hülse 22 entlang von entsprechenden Keilflächen verschoben werden können und dabei das dazwischen eingefügte Ende des Bandmessers 10 festspannen. Die Hülse 22 weist ein Außengewinde und die Hülse 23 ein Innengewinde sowie Antriebsfortsätze für die Keile 24 auf.

Das andere Ende der Antriebsstange 20 ist an einem Drehlager 25 (Fig. 3) befestigt, welches die Verbindung zum Seil 13 herstellt. Das Drehlager 25 besteht im wesentlichen aus zwei zueinander drehbaren Befestigungsbauteilen 26 und 27. Das Seilende ist zu einer Schlaufe gelegt, die durch eine Preßhülse gesichert ist. Das Befestigungsbauteil 26 besitzt einen Fortsatz 28 mit eingearbeiteter Seilkausche, in welche das schlaufenförmige Seilende eingelegt und mittels einer Schraube sowie einer Deckplatte gesichert wird. Zum Befestigungsbauteil 26 gehört noch eine Schraubbuchse 30, um zwischen zwei Ringschultern die äußeren Laufflächen zweier Kugellager 31 festzulegen. Das Befestigungsbauteil 27 besteht aus einer Mutter 32 am Ende der Antriebsstange 20 im Zusammenwirken mit einer Schulter 20a der Antriebsstange 20. Die inneren Laufringe der Kugellager 31 sind zwischen der Schulter 20a und der Mutter 32 eingespannt.

Das Befestigungsbauteil 26 ist gegen Drehung gestützt, um das Seil 13 gegen Verdrehung zu sichern. Hierzu weist die Schraubbuchse 30 an sich gegenüberliegenden Stellen je eine Abflachung 30a (Fig. 4) auf, die zur Führung durch zwei Stützen 33 dient. Die Stützen 33 sind an dem Werkzeugschlitten 11 oder 12 befestigt und führen das Drehlager 25 bei dessen Hin- und Herbewegung relativ zum jeweiligen Werkzeugschlitten.

Die Antriebsstange 20 besitzt ferner zwei Abflachungen 20b, die zum Aufbringen eines Drehmoments um die Längsachse der Antriebsstange 20 dienen, ohne dessen Längsverschiebbarkeit zu behindern. Zur Kraftübertragung ist eine Dreheinrichtung 35 vorgesehen, die ein Paar von sich gegenüberstehenden Rollen 36 aufweist, die auf den Abflachungen 20b ablaufen. Die Abflachungen 20b sind vorzugsweise parallel zueinander angeordnet und damit auch die Drehachsen der Rollen 36. Die Drehachsen der Rollen 36 sind mittels Stützlager 37 an einem mehrteiligen zusammengesetzten Lagerträger 38 der Dreheinrichtung 35 befestigt. Der Lagerträger 38 ist im wesentlichen als zylindrisches Gehäuse ausgebildet und kann einen ausziehbaren, teleskopartigen, nicht dargestellten Fortsatz aufweisen, der das Bandmesser 10 nahe des Werkstücks 9 führt. Auf diese Weise wird der auf das Bandmesser einwirkende, rückdrehende Schneiddruck aufgefangen, so daß der Torsionsverdrehungsbetrag des Bandmessers klein bleibt, der eine Fehlabweichung vom korrekten Schnittwinkel bedeutet. Das Lagergehäuse 38 der Dreheinrichtung 35 ist über zwei Kugellager 39 (Fig. 2) in einem Stützgehäuse 11a des jeweiligen Werkzeugschlittens drehbar, aber unverschieblich gelagert und enthält Längslagermittel 40 (Gleitlagerschalen oder Kugellängsführungen) zur weiteren Führung und Längslagerung der Antriebsstange 20. Über eine Bohrung 41 und Käfige 42 können diese Längslagermittel 40 geschmiert werden. Am Außenumfang der Dreheinrichtung 35 (Fig. 3) ist eine mit seitlichen Führungen 44 versehene Zahnriemenscheibe 43 vorgesehen, über die ein Zahnriementrieb 45 läuft, der wegen seiner Formschlüssigkeit schlupffrei ist und mit einer Zahnriemenscheibe 46 eines Stellmotors 51 zusammenarbeitet. Die Drehung der Antriebsstange 20 erfolgt über das Rollenpaar 36, die mit Vorspannung an den Abflachungen 20b anliegen. In der Null-Stellung des Drehantriebs liegen die Einspannflächen der Keile 24 genau senkrecht und die Führungsflächen 20b in der Hauptebene des Schneidaggregatträgers 6. Das Bandmesser 10 kann also nicht schräg oder tordiert eingebaut werden. Beim Einbau ist ferner darauf zu achten, daß die Schneidkante 10a (Fig. 5) genau in der Drehachse 35a der Dreheinrichtung 35 liegt, was durch entsprechende radiale Markierungen (Fig. 5) an der Hülse 23 überprüft bzw. durch Anschlagstifte eingestellt werden kann.

Der Stellmotor 51 gehört zu einer Nachdreh-Steuereinrichtung 50, die pro Dreheinrichtung 35 noch einen Winkelgeber 52 sowie einen Vergleicher 53 zum Istwert-Sollwert-Vergleich und Abgabe eines Steuerbefehls, ferner eine Istwertleitung 54, eine Sollwertleitung 55 und eine Steuerbefehlsleitung 56 enthält. Bei Abweichung des Winkelwerts der Dreheinrichtung 35 vom Sollwert, der sich laufend ändern kann, wird die Dreheinrichtung 35 gedreht und damit die Schneidmesserebene 10e (Fig. 5) den Erfordernissen nachgestellt.

Da es zwei Dreheinrichtungen 35 gibt, müssen diese zum synchronen Antrieb gekoppelt werden, was über eine sogenannte elektrische Welle 57, 58, 59 erfolgt. Diese enthält zwei inkrementale Weg- oder Winkelgeber 57, einen Vergleicher 58 und einen Operationsverstärker 59, wodurch die Stellungen der beiden Drehsysteme miteinander verglichen und bei Abweichung voneinander das eine System auf Übereinstimmung mit dem anderen System nachgeregelt wird. Die Dreheinrichtungen 35 können auch von einem gemeinsamen Motor mit zwei mechanischen Antriebswellen angetrieben werden.

Wenn es sich bei den Werkstücken 9 um dünne Schaumstoffplatten handelt, würden diese angehoben werden, wenn sich das Bandmesser 10 nach oben bewegt. Deshalb ist ein Niederhalter 110 vorgesehen, der an dem Werkzeugschlitten 11 befestigt ist, jedoch bis zur Auflage einer Gleitkufe oder eines Gleitschuhes 111 auf dem Werkstück 9 nach unten herabgelassen werden kann. Der Gleitschuh 111 ist am unteren Ende einer Zahnstange 112 mittels Überbrückungsstücken 113 einstellbar befestigt, um genau zur Achse 35a der Dreheinrichtung 35 zu fluchten. Die Zahnstange 112 erstreckt sich parallel zur Antriebsstange 20 und weist Führungen 114 auf, die mit Rollenpaaren 115 (Fig. 2) und 116 (Fig. 3) zusammenarbeiten, die am Halter 11b (Fig. 2) bzw. 11c (Fig. 3) sitzen, welche an dem Werkzeugschlitten 11 befestigt sind. Die Überbrückungsstücke 113 weisen ein Drehlager 117 auf, das zur drehbaren Lagerung des Gleitschuhes 111 dient. Dieser weist einen Schlitz 118 auf, durch den das Schneidmesser 10 geführt ist, welches somit den Gleitschuh 111 dreht. Statt dieses passiven Antriebs kann auch ein aktiver Antrieb des Gleitschuhs vorgesehen sein. Wenn nämlich der Lagerträger 38 einen nicht dargestellten ausziehbaren teleskopartigen Fortsatz aufweist, wird dieser mit dem Gleitschuh 111 verbunden, so daß der Gleitschuh aktiv von der Dreheinrichtung 35 nachgedreht wird, um das Messer 10 nahe des Schneidbereichs gegen den rückdrehenden Schneiddruck zu stützen.

Zum Antrieb der Zahnstange 112 ist ein reversierbarer Motor 120 vorgesehen, auf dessen Abtriebswelle 121 ein Zahnrad 122 über eine Reibkupplung 123 befestigt ist. Die Reibkupplung 123 enthält eine Ringschulterbuchse 124 und einen Andruckring 125, die jeweils zur Seite des Zahnrades 122 mit Reibbelägen versehen sind, sowie Tellerfedern 126 und eine Mutter 127, die auf einem Gewinde der Ringschulterbuchse 124 aufgeschraubt ist, um als Widerlager für die Tellerfeder 126 zu dienen. Durch geeignetes Erregen des reversierbaren Motors 120 läßt sich somit das Zahnrad 122 und damit die Zahnstange 112 antreiben. Kurz bevor der Gleitschuh 111 auf dem Werkstück 9 zur Auflage kommt, wird der Motor 120 z.B. nach Sicht abgeschaltet. Beim Hochfahren des Gleitschuhes 111 könnte dieser gegen den Einspannkopf 21 anschlagen ; um jedenfalls Beschädigungen zu vermeiden, kann das Zahnrad 122 durchrutschen.

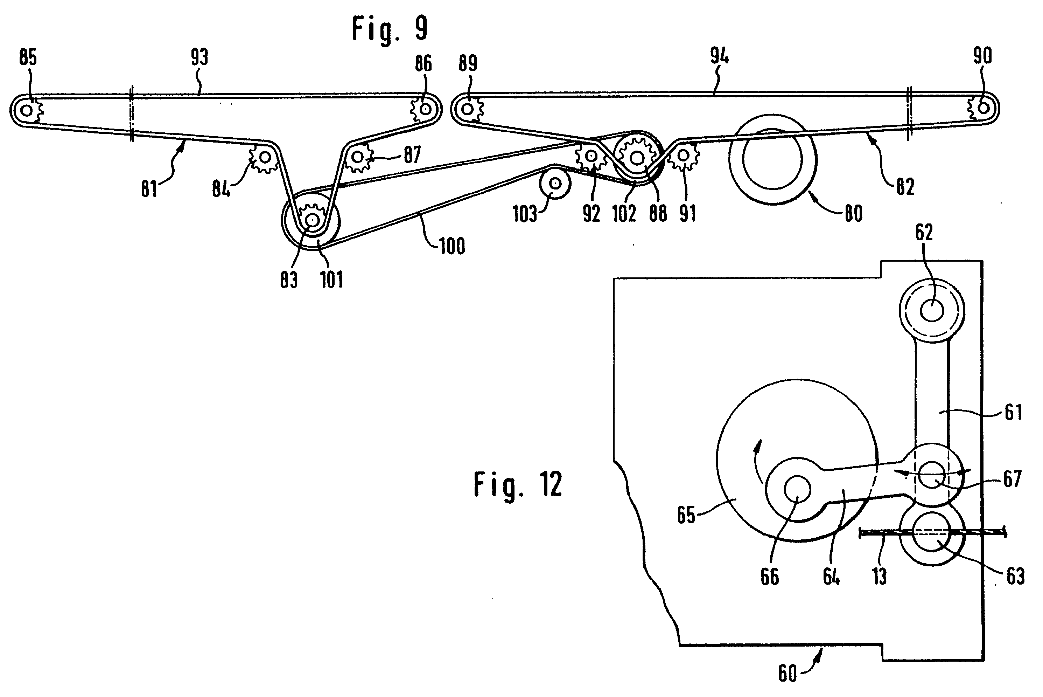

Zum Antrieb des Bandmessers 10 in Z-Richtung ist ein Oszillationsantrieb 60 (Fig. 12) in dem Werkzeugschlitten 12 eingebaut, der an dem Seil 13 angreift und dieses etwa um 50 mm hin- und herbewegt. Der Oszillationsantrieb 60 enthält eine Schwinge 61, die mittels eines Lagers 62 an dem Werkzeugschlitten 12 schwenkbar befestigt ist und am freien Ende eine Klemmeinrichtung 63 zum Einspannen des Drahtes 13 aufweist. Die Schwinge 61 ist über eine Koppelstange 64 mit einer als Schwungrad ausgebildeten Kurbel 65 verbunden, die von einem nicht gezeigten Motor umlaufend angetrieben wird. Das mit der Kurbel 65 verbundene Ende 66 der Koppelstange 64 läuft demnach um, während das andere Ende 67 hin- und herschwingt und dabei die Schwinge 61 antreibt, welche ihrerseits das Seil 13 mitnimmt und somit oszillierend antreibt.

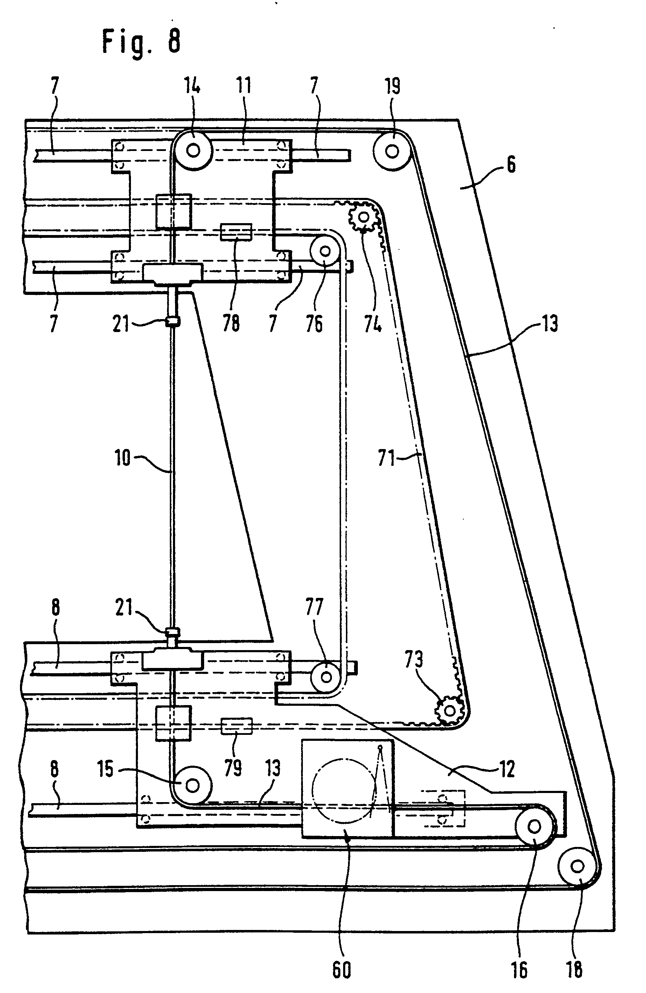

Der Antrieb der Werkzeugschlitten 11 und 12 in Y-Richtung erfolgt über einen im unteren Schenkel des Schneidaggregatträgers 6 untergebrachten Antrieb 70 (Fig. 7), der einen Zahnriemen 71 über ein Antriebsrad 72 antreibt. Der Zahnriemen 71 ist über das Antriebsrad 72 sowie über fünf weitere Umlenkräder 73 bis 77 geführt. Die Achsen der Räder 72 bis 77 sind in dem Schneidaggregatträger 6 gelagert und so angeordnet, daß sich das Zahnriemenstück zwischen den Umlenkrädern 74, 75 und 76 parallel zur Führung 7 und das Zahnriemenstück zwischen den Rädern 77, 72 und 73 parallel zur Führung 8 erstreckt. Wenn der Zahnriemen 71 angetrieben wird, laufen diese Riementeile offenbar parallel zueinander in gleicher Richtung und mit gleicher Geschwindigkeit. Der Zahnriemen 71 kann deshalb an den Werkzeugschlitten 11 und 12 festgemacht werden, um diese mit gleichen Beträgen und in gleicher Richtung anzutreiben, wie bei 78 und 79 in Fig. 8 angedeutet. Die Schlitten 11 und 12 verschieben sich genau senkrecht übereinander.

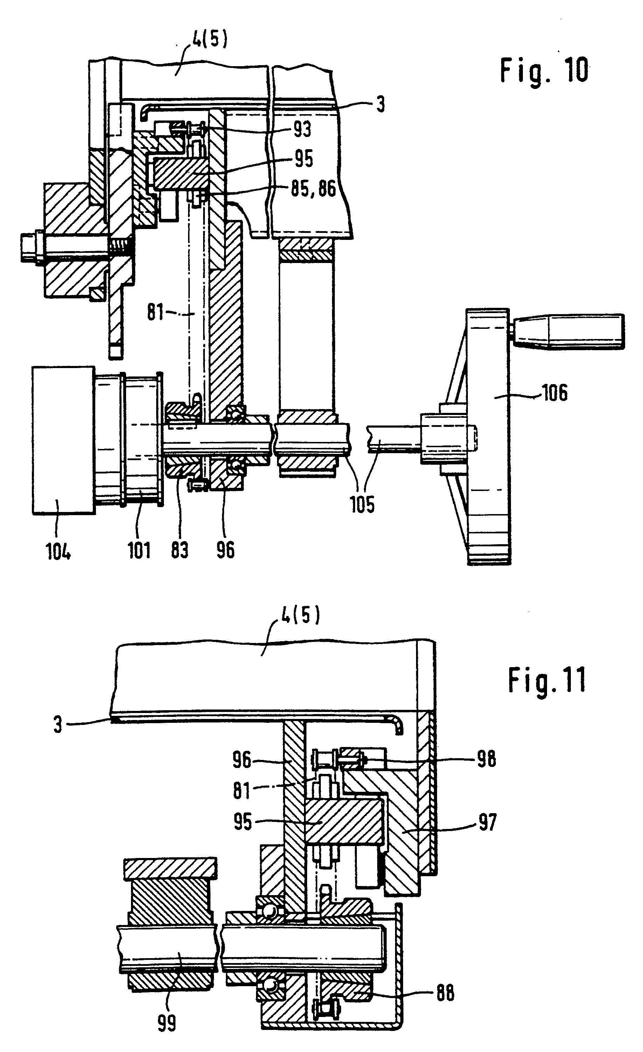

Fig. 9 zeigt wesentliche Teile des X-Antriebes 80. Dieser enthält zwei endlose Ketten 81 und 82, die um Kettenräder 83 bis 87 bzw. 88 bis 92 gespannt sind, wobei jeweils ein Trum 93 bzw. 94 parallel zur Tischoberfläche verläuft. Diese Teile 93 bzw. 94 der Ketten 81 bzw. 82 sind mit der einen Seite der Schieber 4 bzw. 5 verbunden, wobei die Art der Kopplung aus den Fig. 10 und 11 hervorgeht. Am Maschinenhauptteil 2 sind Führungen 95 vorgesehen, die zur Stützung und Längsführung der Schieber 4 und 5 zu beiden Seiten des Tischgestells 96 angebracht sind. Die Schieber 4 und 5 weisen jeweils an den Wangen des Tischgestells herabreichende Längslager 97 auf, welche die Führungen 95 umgreifen. An den Längslagern 97 sind ferner Kopplungsmittel 98 angebracht, welche die Verbindung zu dem Trum 93 der Kette 81 bzw. 94 der Kette 92 herstellen. Das Kettenrad 88 weist eine Welle 99 (Fig. 11) auf, die über nicht gezeigte Getriebemittel von dem Antrieb 80 antreibbar ist, so daß über die Kette 82 der Schieber 5 und über einen Kopplungsriemen 100 (Fig. 9) das Kettenrad 83 und damit auch die Kette 81 und der Schieber 4 angetrieben werden können.

Der Kopplungsriemen 100 läuft über Riemenscheiben 101, 102, 103, wovon die Riemenscheibe 103 zum Spannen des Riemens 100 gedacht ist. Die Riemenscheibe 102 ist drehfest mit dem Kettenrad 88 verbunden. Zwischen der Riemenscheibe 101 und dem Kettenrad 83 gibt es jedoch eine lösbare Verbindung infolge einer Elektromagnetzahnkupplung 104, welche die Verbindung der Riemenscheibe 101 zur Welle 105 entweder herstellt oder löst. An dem der Zahnkupplung 104 entgegengesetzten Ende der Welle 105 ist ein Handrad 106 vorgesehen, mit dem bei gelöster Elektromagnetzahnkupplung 104 die Kette 81 und damit der Schieber 4 allein verstellt werden kann, um das Werkstück 9 zwischen den Schiebern 4 und 5 einzuklemmen. Bei eingerückter Elektromagnetzahnkupplung 104 erfolgt dann der gemeinsame Antrieb der Ketten 81 und 82 über den Motor des X-Antriebes 80.

Die Längsbewegung der Schieber 4 und 5 kann natürlich auch auf andere Weise bewerkstelligt werden, beispielsweise mittels Zahnstangen oder Antriebsspindeln, wie dies der Einfachheit halber in Fig. 1 angedeutet worden ist. Auch in einem solchen Fall kann eine lösbare Antriebsverbindung vorgesehen sein, um nur den einen Schieber 4 oder 5 antreiben zu können, wenn der Abstand zwischen den Schiebern 4 und 5 einzustellen ist.

Der Betrieb der Maschine geht wie folgt vor sich : Das Werkstück 9, welches ein Schaumstoffblock oder horizontal aufgeschnittene Schaumstoffschichten sein kann, wird auf die geteilte Tischplatte 3 aufgelegt, und die Schieber 4 und 5 werden zum Rand des Schaumstoffblockes hin verfahren, so daß dieser gewissermaßen eingespannt ist. Der Z-Antrieb 60 des Bandmessers 10 wird in Betrieb genommen. Die Werkzeugschlitten 11 und 12, welche die in Fig. 7 dargestellte Ausgangslage haben, werden in Richtung auf das Werkstück 9 verfahren, wobei dann das Bandmesser 10 in den Schlitz 3a und schließlich in das Werkstück 9 eindringt. Der Y-Antrieb 70 und der X-Antrieb 80 werden so betrieben, daß das Bandmesser die vorgesehene Kurve in der XY-Ebene durchfährt. Gleichzeitig werden die entsprechenden Steuerspannungen $U_x$ und $U_y$ der Nachdreh-Steuereinrichtung 50 zugeführt, welche aus dem Quotienten dieser Werte den Tangens den Nachdrehwinkels $\alpha$ ermittelt und den Stellmotor 51 bei Abweichung des Sollwertes vom Istwert nachsteuert. Dadurch wird die Schneidkante 10a des Bandmessers immer in die richtige Schneidrichtung gedreht. Dies garantiert einen korrekten Schnittverlauf des Formschnittes.

Das Schneidmesser 10 ist außerordentlich schmal, damit auch der Schlitz 3a sehr schmal sein kann. Der Schlitz 118 im Gleitschuh 111 kann ohnehin sehr schmal gemacht werden. Wenn das Schneidmesser 10 oszilliert und das benachbarte Schaumstoffmaterial 9 mitzunehmen bestrebt ist, wird dies durch Wandteile benachbart den Schlitzen 3a und 118 verhindert, d.h. das Messer kann sich nur relativ zum Schaumstoffmaterial bewegen und dieses schneiden.

Wenn man ein umlaufendes Schneidmesser wählt, dann wird dies vorzugsweise so angetrieben, daß der Schneiddruck das Schaumstoffmaterial gegen den Gleitschuh 111 drückt, während der Tisch im Bereich des Schlitzes 3a entlastet ist, wobei dort keine Tendenz des Einklemmens von Schaumstoffteilen in den Schlitz 3a auftritt.

<u>Bezugszeichenliste</u>

| | |
|---|---|
| 1 | Maschinenhauptteil |
| 2 | Maschinenhauptteil |
| 3 | Tischplatte |
| 3a | Schlitz, Spalt |
| 4 | Schieber |
| 5 | Schieber |
| 6 | Schneidaggregatträger |
| 7 | obere Führungen |
| 8 | untere Führungen |
| 9 | Werkstück |
| 10 | Bandmesser |
| 11 | Werkzeugschlitten |
| 12 | Werkzeugschlitten |
| 13 | Seil |
| 14–19 | Seilscheiben |
| 20 | Antriebsstange |
| 21 | Einspannkopf |
| 22 | Hülse |
| 23 | Hülse |
| 24 | Keile |
| 25 | Drehlager |
| 26 | Befestigungsteil |
| 27 | Befestigungsteil |
| 28 | Fortsatz |
| 29 | Buchse |
| 30 | Schraubbuchse |
| 31 | Kugellager |
| 32 | Mutter |

| | |
|---|---|
| 33 | Stützen |
| 35 | Dreheinrichtung |
| 36 | Rollenpaar |
| 37 | Stützlager |
| 38 | Lagerträger |
| 39 | Kugellager |
| 40 | Gleitlagerschalen |
| 41 | Bohrung |
| 42 | Käfige |
| 43 | Zahnriemenscheibe |
| 44 | seitliche Führungen |
| 45 | Zahnriemen |
| 46 | Zahnriemenscheibe |
| 47, 48, 49 | —— |
| 50 | Steuereinrichtung |
| 51 | Stellmotor |
| 52 | angebauter Winkelgeber |
| 53 | Vergleicher |
| 54 | elektrische Istwertleitung |
| 55 | elektrische Sollwertleitung |
| 56 | elektrische Steuerleitung |
| 57 | Winkelgeber |
| 58 | Vergleicher |
| 59 | Operationsverstärker |
| 60 | Oszillationsantrieb |
| 61 | Schwinge |
| 62 | Lager |
| 63 | Klemmeinrichtung |
| 64 | Koppelstange |
| 65 | Kurbel |
| 66, 67 | Ende der Koppelstange |
| 68, 69 | —— |
| 70 | Y-Antrieb |
| 71 | Zahnriemen |
| 72-77 | Umlenkräder |
| 78 | Befestigungsstellen |
| 79 | Befestigungsstellen |
| 80 | X-Antrieb |
| 81 | Kette |
| 82 | Kette |
| 83-92 | Kettenräder |
| 93, 94 | Trum |
| 95 | Führungen |
| 96 | Tischgestell |
| 97 | Längslager |
| 98 | Kopplungsmittel |
| 99 | Welle |
| 100 | Kopplungsriemen |
| 101-103 | Riemenscheiben |
| 104 | Zahnkupplung |
| 105 | Welle |
| 106 | Handrad |
| 107, 108, 109 | —— |
| 110 | Niederhalter |
| 111 | Gleitschuh |
| 112 | Zahnstange |
| 113 | Überbrückungsstücke |
| 114 | Führungen |

| 115, 116 | Rollenpaare |
|---|---|
| 117 | Drehlager |
| 118 | Schlitz |
| 119 | — |
| 120 | Motor |
| 121 | Antriebswelle |
| 122 | Zahnrad |
| 123 | Reibkupplung |
| 124 | Ringschulterbuchse |
| 125 | Andruckring |
| 126 | Tellerfeder |
| 127 | Mutter |

**Patentansprüche**

1. Vertikalformschneidmaschine mit folgenden Merkmalen :
ein erster Maschinenhauptteil (1) umfaßt :

a) einen Schneidaggregatträger (6) mit zwei parallel übereinander angeordneten Führungseinrichtungen (7, 8),

b) einen obereren und einen unteren Werkzeugschlitten (11, 12), von denen der obere Werkzeugschlitten (11) längs der oberen Führungseinrichtung (7) und der untere Werkzeugschlitten (12) längs der unteren Führungseinrichtung (8) geführt sind und beide jeweils in gleicher Richtung und um gleiche Beträge antreibbar sind,

c) ein schmales Bandmesser (10), welches zwischen den beiden Werkzeugschlitten (11, 12) gespannt und in Längsrichtung antreibbar ist,

d) eine Dreheinrichtung (20 bis 50) für das Bandmesser, die hälftig in den beiden Werkzeugschlitten (11, 12) untergebracht ist und die Schneidebene (10e) des Bandmessers entsprechend der Tangente an die zu schneidende Kontur nachdreht, sowie

e) einen Längsantrieb (60) für das Bandmesser (10) ; ein zweiter Maschinenhauptteil (2) umfaßt

f) eine geteilte, gerätefeste Tischplatte (3) als Auflagefläche eines Werkstücks (9) sowie mit einem schmalen Spalt (3a) zum Durchtritt des Bandmessers (10) und

g) zwei Schieber (4, 5), die zum Einspannen des Werkstücks (9) auf der Tischplatte (3) gegeneinander und zum Verschieben des Werkstücks beim Formschneiden miteinander auf der Tischplatte (3) verfahren werden können.

2. Formschneidmaschine nach Anspruch 1, gekennzeichnet durch einen Niederhalter (110), der einen Schlitz (118) zum Durchführen des Bandmessers (10) aufweist und zum Auffangen des nach oben gerichteten Schneiddruckes ausgebildet ist.

3. Formschneidmaschine nach Anspruch 1 oder 2, dadurch gekennzeichnet, daß das Bandmesser (10) eine den Schneidbereich oberhalb der Tischplatte (3) nur wenig übersteigende Länge aufweist und zwischen Einspannköpfen (21) beider Werkzeugschlitten (11, 12) eingespannt ist, und daß der Bandmesserantrieb als Oszillationsantrieb (60) ausgebildet ist.

4. Formschneidmaschine nach Anspruch 1, 2 oder 3, dadurch gekennzeichnet, daß der Schneidaggregatträger (6) zwei Schenkel aufweist, von denen der eine Schenkel unterhalb des Spaltes (3a) der Tischplatte (3) und der andere Schenkel in einem Abstand oberhalb der Tischplatte (3) angeordnet ist, der die maximale Höhe des zu schneidenden Werkstücks (9) ein wenig übersteigt.

5. Formschneidmaschine nach einem der Ansprüche 1 bis 4, dadurch gekennzeichnet, daß der Schneidaggregatträger (6) längs der Führungen (7, 8) angeordnete Bahnen eines umlaufenden, biegsamen Antriebsorganes (71) aufweist, die in gleicher Bewegungsrichtung durchmessen werden, und daß die Werkzeugschlitten (11, 12) mit diesem Antriebsorgan (71) verbunden (78, 79) sind.

6. Formschneidmaschine nach Anspruch 5, dadurch gekennzeichnet, daß das biegsame Antriebsorgan ein Zahnriemen (71) ist, der über sechs Räder (72 bis 77) gespannt ist, von denen drei (74, 75, 76) längs der oberen Führungseinrichtung (7) und drei (72, 73, 77) längs der unteren Führungseinrichtung (8) angeordnet sind.

7. Formschneidmaschine nach einem der Ansprüche 1 bis 6, dadurch gekennzeichnet, daß zum Spannen des Bandmessers (10) ein biegsames Spannorgan (13) über sechs Scheiben (14 bis 19) geführt ist, von denen drei (14, 15, 16) mit den Werkzeugschlitten (11, 12) mitfahren und drei (17, 18, 19) mit dem Schneidaggregatträger (6) verbunden sind, und daß zwei Scheiben (17, 18) längs der unteren Führungseinrichtung (8) und zwei Scheiben (15, 16) in dem unteren Werkzeugschlitten (12) angeordnet sind, wobei längs der einen Führungseinrichtung (8) eine Schlaufe (zwischen 16, 17, 18) gespannt ist, die sich in gleichem Maße verkürzt (13a') und verlängert (13a), wie sich die Schlaufenlänge (zwischen 14 und 19) längs der anderen Führungsrichtung (7) verlängert (13b') und verkürzt (13b).

8. Formschneidmaschine nach einem der Ansprüche 1 bis 7, dadurch gekennzeichnet, daß zum Verfahren der Schieber (4, 5) ein Antrieb (80) vorgesehen ist, der quer zum Tischspalt (3a) sich erstreckende Antriebsbahnen (93, 94) aufweist und daß wenigstens einer der Schieber (4 oder 5) von diesen Antriebsbahnen entkuppelbar ausgebildet ist.

9. Formschneidmaschine nach Anspruch 8, dadurch gekennzeichnet, daß sich zu jeder Seite des Tischspaltes (3a) eine Antriebsbahn befindet und daß diese Antriebsbahnen (93, 94) über ein Schaltmittel (104) miteinander gekuppelt bzw. voneinander entkuppelt werden können.

10. Formschneidmaschine nach Anspruch 9, dadurch gekennzeichnet, daß bei entkuppelten Antriebsbahnen (93, 94) eine der Antriebsbahnen (93) von einem Handrad (106) zum Einspannen des Werkstücks (9) betätigt werden kann.

## Claims

1. A vertically contour cutting machine having the following features :
a first machine main section (1) comprises :

(a)  a cutting unit carrier (6) with two guide devices (7, 8) disposed in parallel relationship one above the other,

(b)  an upper and a lower tool carriage (11, 12), the upper tool carriage (11) being guided along the upper guide device (7) and the lower tool carriage (12) being guided along the lower guide device (8) and each being drivable in the same direction and by the same amounts,

(c)  a narrow band knife (10) which is tensioned between the two tool carriages (11, 12) and is drivable in the longitudinal direction,

(d)  a band knife rotating means (20 to 50) having two halves each of which is accommodated in a respective tool carriage (11, 12), and turning the cutting plane (10e) of the band knife in accordance with the tangent to the contour being cut, and

(e)  a longitudinal drive (80) for the band knife (10) ; a second machine main section (2) comprises

(f)  a stationary divided tabletop (3) providing a supporting surface for a workpiece (9) and having a narrow gap (3a) for the passage of the band knife (10) and

(g)  two pushers (4, 5) movable towards one another for clamping the workpiece (9) on the tabletop (3) and movable together on the tabletop (3) for the purpose of displacing the workpiece during contour cutting.

2. A contour cutting machine according to claim 1, characterized by a hold-down device (110) which has a slot (118) for the passage of the band knife (10) and which is constructed to take the upwardly directed cutting pressure.

3. A contour cutting machine according to claim 1 or 2, characterized in that the band knife (10) has a length which only slightly exceeds the cutting zone above the tabletop (3) and is clamped between clamping heads (21) of the two tool carriages (11, 12), and in that the band knife drive is constructed as an oscillatory drive (60).

4. A contour cutting machine according to claim 1, 2 or 3, characterized in that the cutting unit carrier (6) has two limbs, one of which is disposed beneath the gap (3a) in the tabletop (3) and the other is disposed at a distance above the tabletop (3), such distance being slightly in excess of the maximum height of the workpiece (9) being cut.

5. A contour cutting machine according to any one of claims 1 to 4, characterized in that the cutting unit carrier (6) has tracks disposed along the guides (7, 8) for a cirulating flexible drive element (71), such tracks being displaced in the same direction of movement, and in that the tool carriages (11, 12) are connected (78, 79) to said drive element (71).

6. A contour cutting machine according to claim 5, characterized in that the flexible drive element is a toothed belt (71) which is tensioned over six wheels (72 to 77), three of which (74, 75, 76) are disposed along the upper guide device (7) and three (72, 73, 77) along the lower guide device (8).

7. A contour cutting machine according to any one of claims 1 to 6, characterized in that for the purpose of tensioning the band knife (10) a flexible tensioning element (13) is trained over six discs (14 to 19), three of which (14, 15, 16) move together with the tool carriages (11, 12) and three of which (17, 18, 19) are connected to the cutting unit carrier (6), and in that two discs (17, 18) are disposed along the lower guide device (8) and two discs (15, 16) are disposed in the lower tool carriage (12), a loop (between 16, 17, 18) being tensioned along one of the guide devices (8) and shortening (13a') and lenghtening (13a) to the same extent as the loop length (between 14 and 19) lengthens (13b') and shortens (13b) along the other guide device (7).

8. A contour cutting machine according to any one of claims 1 to 7, characterised in that a drive (80) is provided to move the pushers (4, 5) and has drive tracks (93, 94) extending transversely of the table gap (3a) and at least one of the pushers (4 or 5) is constructed to be disengaged from said drive tracks.

9. A contour cutting machine according to claim 8, characterised in that there is a drive track on each side of the table gap (3a) and said drive tracks (93, 94) can be coupled together or decoupled from one another via an actuating means (104).

10. A contour cutting machine according to claim 9, characterised in that when the drive tracks (93, 94) are decoupled, one of the drive tracks (93) can be actuated by a handwheel (106) for the purpose of clamping the workpiece (9).


## Revendications

1. Machine à couper verticalement selon des contours dont les caractéristiques sont les suivantes :
une première composante (1) de la machine principale comporte :

a)   un support de groupe de coupe (6) comportant deux dispositifs de guidage (7, 8) placés parallèlement l'un au-dessus de l'autre,

b)   un chariot porte-outil supérieur (11) et un autre inférieur (12), qui sont respectivement guidés le long du dispositif supérieur de guidage (7) et le long du dispositif inférieur de guidage (8), les deux chariots étant respectivement réglables dans une même direction et ce pour des valeurs identiques,

c)   un ruban couteau étroit (10), qui est tendu entre les deux chariots porte-outil (11, 12) et qui peut être actionné en direction longitudinale,

d)   un mécanisme de rotation (20 à 50) du couteau ruban, placé par moitié dans les deux porte-outil (11, 12) et qui oriente le plan de coupe (10e) du couteau ruban selon la tangente au contour à couper, ainsi que

e)   une commande longitudinale (60) pour le couteau ruban (10) ; une deuxième composante (2) principale de la machine comporte :

f)   une table (3) fendue en deux, fixe, servant de surface support pour une pièce à travailler (9) et comportant une fente étroite (3a) pour le passage du couteau ruban (10) et

g)   deux coulisseaux (4, 5) qui peuvent être déplaces sur la table (3) l'un par rapport à l'autre, afin de serrer la pièce à travailler (9) et ensemble afin de translater cette dernière lors de la coupe selon le contour.

2. Machine à couper selon des contours d'après la revendication 1, caractérisée par un serre-flanc (110),qui présente une fente (118) servant au passage du couteau ruban (10) et est configuré pour absorber la pression de coupe dirigée vers le haut.

3. Machine à couper selon des contours d'après la revendication 1 ou 2, caractérisee en ce que le couteau ruban (10), dont la longueur ne dépasse que de peu la zone de coupe au-dessus de la table (3), est monté entre les têtes de fixation (21) des deux porte-outil (11, 12) et en ce que l'entraînement du couteau ruban est un entraînement par oscillation (60).

4. Machine à couper selon des contours d'après la revendication 1, 2 ou 3, caractérisée en ce que le support (6) du groupe de coupe présente deux branches, dont l'une est placée au-dessus de la fente (3a) de la table (3) et l'autre à distance au-dessus de la table (3), dépassant ainsi légèrement la hauteur maximale de la pièce à couper (9).

5. Machine à couper selon des contours d'après l'une des revendications 1 à 4, caractérisée en ce que le support (6) du groupe de coupe présente, placées le long des guides (7, 8), des voies d'un organe souple et tournant de commande (71), lesquelles sont parcourues dans le même sens de mouvement et en ce que les porte-outil (11, 12) sont reliés (78, 79) à cet organe de commande (71).

6. Machine à couper selon des contours d'après la revendication 5, caractérisée en ce que l'organe souple de commande est une courroie dentée (71), qui est tendue par l'intermédiaire de six roues (72 à 77), dont trois (74, 75, 76) sont situées le long du dispositif supérieur de guidage (7) et trois (72, 73, 77) le long du dispositif inférieur de guidage (8).

7. Machine à couper selon des contours d'après l'une des revendications 1 à 6, caractérisée en ce que, pour la tension du couteau ruban (10), un organe souple de tension (13) est guidé par l'intermédiaire de six disques (14 à 19), dont trois (14, 15, 16) se déplacent avec les porte-outil (11, 12) et trois (17, 18, 19) sont reliés au support (6) du groupe de coupe et en ce que deux disques (17, 18) sont situés le long du dispositif de guidage inférieur (8) et deux (15, 16) dans le porte-outil inférieur (12), un passant étant tendu (entre 16, 17, 18) le long de l'un des dispositifs de guidage (8) passant qui se raccourcit (13a') ou s'allonge (13a) dans une même mesure, de la même manière que s'allonge (13b') ou se raccourcit (13b) la longueur du passant (entre 14 et 19) le long de l'autre dispositif de guidage (7).

8. Machine à couper selon des contours d'après l'une des revendications 1 à 7, caractérisée en ce qu' une commande (80) est prévue pour le déplacement des coulisseaux (4, 5), laquelle présente des voies d'entraînement (93, 94) s'étendant transversalement à la fente (3a) de la table et en ce que l'un au moins des coulisseaux (4 ou 5) peut être désaccouplé de ces voies d'entraînement.

9. Machine à couper selon des contours d'après la revendication 8, caractérisée en ce qu' une voie d'entraînement se trouve de chaque côté de la fente (3a) de la table et en ce que ces voies d'entraînement (93, 94) peuvent, par l'intermédiaire d'un dispositif de connexion (104), soit être couplées entre elles, soit désaccouplées l'une de l'autre.

10. Machine à couper selon des contours d'après la revendication 9, caractérisée en ce que, les voies d'entraînement (93, 94) étant désaccouplées, l'une de celles-ci (93) peut être actionnée par un volant à main (106) pour serrer la pièce à travailler (9).

Fig. 2

Fig. 1

# Fig. 3

Fig. 4

Fig. 5

Fig. 6

Fig. 7

# Fig. 8

Fig. 10

Fig. 11

# Fig. 9

# Fig. 12

EP 0 390 939 B1